# EUROPÄISCHE PATENTSCHRIFT

(11) **EP 3 630 479 B1**
(45) Veröffentlichungstag und Bekanntmachung des Hinweises auf die Patenterteilung: **21.01.2026**
(21) Anmeldenummer: 18728149.8
(22) Anmeldetag: 30.05.2018
(51) Int. Cl.: B30B 15/06, B29C 70/46, B29C 70/34, B29C 43/36, B29C 43/58, B30B 1/34

(54) **PRESSE UND VERFAHREN ZUM HERSTELLEN DES FORMTEILS**
PRESS AND METHOD FOR PRODUCING THE MOULDED PART
PRESSE ET PROCÉDÉ POUR LA FABRICATION DE LA PIÈCE MOULÉE

(30) Priorität: 31.05.2017 DE 102017111924
(43) Veröffentlichungstag der Anmeldung: 08.04.2020
(73) Patentinhaber: Siempelkamp Maschinen- und Anlagenbau GmbH, 47803 Krefeld (DE)
(72) Erfinder: DIEDERICHS, Michael, 41472 Neuss (DE)
(74) Vertreter: Michalski Hüttermann & Partner Patentanwälte mbB
(86) Internationale Anmeldenummer: PCT/EP2018/064198
(87) Internationale Veröffentlichungsnummer: WO 2018/220019

(56) Entgegenhaltungen:
- DE-A1- 102013 109 490
- FR-A- 1 378 183
- US-A- 5 478 225

## Beschreibung

### Technisches Gebiet

Die Erfindung betrifft eine Presse mit einem einen Oberholm und einen Unterholm aufweisenden Pressengestell, einem Oberwerkzeug und einem an dem Unterholm vorgesehenen Unterwerkzeug zum Herstellen eines Formteils und wenigstens einem an dem Oberholm vorgesehenen Presszylinder mit einem Kolben, welcher an dem Oberwerkzeug über ein Lager angelenkt und ausgeführt ist, eine Presskraft auf das Formteil auszuüben. Ferner betrifft die Erfindung ein Verfahren zum Herstellen des Formteils durch das Oberwerkzeug und das an dem Unterholm der Presse vorgesehenen Unterwerkzeug, wobei das Pressengestell der Presse den Oberholm und den Unterholm sowie den wenigstens einen an dem Oberholm vorgesehenen Presszylinder mit dem Kolben aufweist, welcher an dem Oberwerkzeug über das Lager angelenkt und ausgeführt ist, die Presskraft auf das Formteil auszuüben.

### Hintergrund der Erfindung

Pressen sind aus dem Stand der Technik bekannt und werden zum Herstellen von Formteilen aus Faserverbundwerkstoffen mittels Spritzpressen verwendet, auch Resin Transfer Molding (RTM)-Verfahren genannt. Bei diesem Verfahren werden Fasern, beispielsweise ein Faserhalbzeug, zunächst in ein Formwerkzeug gelegt, welches in der Regel aus Oberwerkzeug und Unterwerkzeug gebildet ist. Nach einem Schließen des Werkzeugs wird eine Formmasse, oftmals bestehend aus einem Harz und einem Härter, in einen Formraum des Formwerkzeugs eingespritzt. Die Formmasse umschließt die Fasern als Matrix und härtet unter Ausbildung des Formteils aus. Ein Beaufschlagen der Form mit Unterdruck und/oder Druck beschleunigt das Aushärten. Zweckmäßigerweise wird der Druck durch Verspannen des in der Presse vorgesehenen Unterwerkzeugs und Oberwerkzeugs gegeneinander aufgebaut.

DE 10 2013 109490 A1 beschreibt eine hydraulische Taktpresse für die Herstellung von Formteilen aus Kunststoff, insbesondere aus Faserverbundkunststoff, mit in einem aus Oberwerkzeug und Unterwerkzeug bestehenden Pressenwerkzeug, mit einem Pressengestell mit Oberholm und Unterholm, mehreren zwischen dem Oberholm und dem Oberwerkzeug befestigten Presszylindern, wobei die Presszylinder sowohl zum Öffnen und Schließen als auch zum Aufbringen der Presskraft eingerichtet sind.

FR 1 378 183 A beschreibt ein System zum Anbringen eines Schlittens an ein Antriebselement in Maschinen wie Tafelscheren, Pressen, Abkantpressen oder anderen.

Derartige Pressen zum Herstellen von Formteilen aus Faserverbundwerkstoffen arbeiten oftmals in Taktbetrieb. Zum Aufbringen der zum Herstellen von Formteilen benötigten hohen Presskräfte werden üblicherweise Plungerzylinder als Presszylinder und aufwendige Schließvorrichtungen sowie Rückzugseinrichtungen in Form von Rückzugszylindern verwendet, was den Aufbau der Pressen verhältnismäßig aufwendig macht. Um dennoch eine ausreichend hohe Pressgenauigkeit und Pressgeschwindigkeit zu erhalten, ist es aus dem Stand der Technik bekannt, mittels eines Kompensationszylinders ein in der Anbindung zwischen Presszylinder und Werkzeug vorhandenes Spiel zu kompensieren. Allerdings benötigen derartige in der Regel in der Kraftmitte zwischen den Presszylindern vorgesehene Kompensationszylinder einen entsprechenden Bauraum, der nicht immer gegeben ist.

### Beschreibung der Erfindung

Ausgehend von dieser Situation ist es eine Aufgabe der vorliegenden Erfindung, eine Presse sowie ein Verfahren zum Herstellen eines Formteils anzugeben, welche bei einem einfachen Aufbau der Presse ein besonders wirtschaftliches und genaues Herstellen des Formteils insbesondere aus Kunststoff ermöglichen.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Presse mit einem einen Oberholm und einen Unterholm aufweisenden Pressengestell, einem Oberwerkzeug und einem an dem Unterholm vorgesehenen Unterwerkzeug zum Herstellen eines Formteils, wenigstens einem an dem Oberholm vorgesehenen Presszylinder mit einem Kolben, welcher an dem Oberwerkzeug über ein Lager angelenkt und ausgeführt ist, eine Presskraft auf das Formteil auszuüben, und einem an dem Lager vorgesehenen Kompensationsmittel, welches ausgeführt ist, auf den Kolben und das Oberwerkzeug eine der Presskraft entgegengesetzt wirkende und variabel einstellbare Kompensationskraft auszuüben, um wenigstens ein durch eine Gewichtskraft des Oberwerkzeugs erzeugtes Spiel zwischen Kolben und Oberwerkzeug zu kompensieren.

Ein wesentlicher Punkt der Erfindung liegt darin, dass das Spiel bzw. Spiellose direkt in der Anbindung des Presszylinders in dem Lager zwischen Oberholm und Oberwerkzeug entfernt wird. Da die Kompensationskraft variabel einstellbar ist, kann diese kompensierende Kraft zu- und weggeschaltet werden, insbesondere in einzelnen diskreten Stufen beispielsweise auf einer Skala von 0 bis 100% eingestellt und/oder über die Presskraft und/oder Lage des Oberwerkzeugs als ausgeführter Hub gesteuert werden. Gegenüber aus dem Stand der Technik bekannten Pressen mit in der Kraftmitte zwischen den Presszylindern vorgesehenem Kompensationszylinder, der einen entsprechenden Bauraum benötigt, lässt sich das vorgeschlagene Kompensationsmittel wesentlich platzsparender und unter beengten Platzverhältnissen an der Presse anordnen.

Im Rahmen der Erfindung ist der Begriff des an dem Lager vorgesehenen Kompensationsmittels nicht als insbesondere in der Kraftmitte zwischen den Presszylindern vorgesehenem Kompensationszylinder zu verstehen. Stattdessen ist der Begriff so auszulegen, dass das Kompensationsmittel bevorzugt nur an der Anbindung zwischen Presszylinder und Oberwerkzeug vorgesehen ist, insbesondere nur zwischen Kolben und einem das Oberwerkzeug haltenden Laufholm oder oberen Werkzeugträger angeordnet ist. Ganz besonders bevorzugt ist der bzw. alle Kompensationszylinder ausschließlich nur in oder innerhalb des Lagers, der Anbindung zwischen Presszylinder und Oberwerkzeug und/oder der Anbindung zwischen Kolben und den das Oberwerkzeug haltenden Laufholm oder dem oberen Werkzeugträger angeordnet.

Die aus dem Stand der Technik bekannten Vorrichtungen zum Kompensieren des Spiels zwischen Presszylinder und Oberwerkzeug bedingen in nachteiliger Weise eine Auslegung und Dimensionierung der Presse sowohl auf das Kompensieren der Gewichtskräfte von Laufholm und Oberwerkzeug wie auch auf die beim Herstellen von Formteilen aus Kunststoff auftretenden Werkzeugaufreißkräfte. Entsprechend muss die Kompensationskraft stets größer als die größte während eines Presszyklus auftretende Zugkraft sein, damit das Spiel bzw. die Spiellose in der Anbindung geschlossen bleiben. Bei diesen bekannten Vorrichtungen wirkt die Kompensationskraft jedoch als Normalkraft auf die Gleitflächen des Gelenks in der Anbindung von Presszylinder und Oberwerkzeug und wirkt derart als Reibkraft einer erwünschten Beweglichkeit dieser Gelenken permanent entgegen. Da die Kompensationskraft variabel einstellbar ist, ist die vorgeschlagene Presse nicht durch diesen Nachteil gekennzeichnet, sondern ermöglicht eine entsprechende Beweglichkeit dieser Gelenke.

Die Presse ist bevorzugt als hydraulische Taktpresse zum Herstellen eines Formteils in einem "Open-Die-Modus" und/oder im Wege des Spritzpressens ausgeführt, insbesondere nach einem Resin Transfer Molding (RTM)-Verfahren und/oder im Wege des Fließpressens ausgeführt, insbesondere nach einem Sheet Molding Compound (SMC)-Verfahren, insbesondere mit nachfolgender Beschichtung im Oberwerkzeug und/oder Unterwerkzeug nach einem In Mold Coating (IMC)-Verfahren. Beim Herstellen von Formteilen im "Open-Die-Modus" ist eine besonders exakte Positionierung des Oberwerkzeugs relativ zum Unterwerkzeug notwendig. Spiel bzw. Spiellose innerhalb der Anbindung der Presszylinder können diese Genauigkeit verringern oder aber die Geschwindigkeit des Herstellungsprozesses reduzieren, da diese Spiellose erst im Zuge des eigentlichen Pressprozesses und folglich erst nach dem Injizieren der Formmasse "herausgedrückt" werden können. Entsprechend geht die Erfindung von der Erkenntnis aus, dass sich vor dem Aufbringen der Presskraft durch "Entfernen" der Spiellose mittels des vorgeschlagenen Kompensationsmittels der Pressprozess optimieren lässt. Dabei ist die Kompensationskraft bevorzugt um ein vorgegebenes Maß größer als die Gewichtskraft des Oberwerkzeuges sowie gegebenenfalls des oberen Werkzeugträgers und gegebenenfalls auch der Gewichtskraft der Kolben der Presszylinder.

Die Presse ist ausgeführt, das Formteil aus einem Kunststoff herzustellen, insbesondere aus einem duroplastischen Kunststoff, beispielsweise aufweisend ein Harz, Epoxidharz, Polyesterharz und/oder Polyurethanharz, welches zunächst flüssig, zähflüssig oder pulverförmig vorliegt und unter Wirkung eines Härters, durch Druck und/oder Wärme aushärtet. Ebenso umfasst die Erfindung das Herstellen von Formteilen aus thermoplastischen Kunststoffen, die beispielsweise erwärmt, als Schmelze, in die Form eingebracht werden und durch Kühlen aushärten. Besonders bevorzugt meint Kunststoff einen faserverstärkten Kunststoff und folglich einen Faserverbundwerkstoff, bei dem Fasern in einer Matrix aus Kunststoff eingebettet werden bzw. eingebettet sind.

Bei den Fasern kann es sich um Glasfasern und/oder Karbonfasern bzw. Kohlefasern aber auch um Keramikfasern, Metallfasern und/oder Naturfasern sowie entsprechende Kombinationen handeln. Die Fasern können lose, bevorzugt in Form von Halbzeugen, beispielsweise als Fasermatten oder dergleichen vorliegen. Als Formteile werden im Rahmen der Erfindung beispielsweise Formteile für die Kraftfahrzeugindustrie verstanden, beispielsweise Karosserieteile, oder Formteile für die Luft- und Raumfahrttechnik, beispielsweise Rumpf, Flügelteile oder dergleichen für den Flugzeugbau. Ferner kann es sich um Komponenten für den Maschinenbau, beispielsweise Komponenten für den Kraftwerkbau, Anlagenbau und insbesondere Windkraftanlagen oder dergleichen handeln.

Die Presse weist eine Steuer- und/oder Regeleinrichtung auf, welche ausgeführt ist, die Kompensationskraft in Abhängigkeit von der Presskraft zu steuern, und/oder zu regeln. Bevorzugt ist die Steuer- und/oder Regeleinrichtung ausgeführt, die Kompensationskraft über eine Lage des Oberwerkzeugs als ausgeführten Hub zu steuern, zu schalten und/oder zu regeln. Die Steuer- und/oder Regeleinrichtung ist bevorzugt mikroprozessorbasiert gestaltet und/oder ausgestaltet, die Kompensationskraft an einen Kraftbedarf der jeweiligen Pressphase, beispielsweise Gewichtskompensation oder Kompensation von Werkzeugaufreißkräften, in variabler und/oder einstellbarer Weise anzupassen. Ferner können die Presszylinder bzw. deren Steuerventile mit der Steuer- und Regeleinrichtung verbunden sein, um eine Druckregelung und/oder Wegregelung für die Presszylinder auszubilden. Ebenso lassen sich in einzelnen Zylinderkammern vorherrschende Drücke bzw. sich daraus ergebenden Presskräfte der Presszylinder ermitteln und der Steuer- und/oder Regeleinrichtung zuführen. Aus den ermittelten Drücken/Kräften unter Berücksichtigung von in der Steuer- und/oder Regeleinrichtung abgelegten Strukturdaten der Presse fortlaufend Verformungen des Pressengestells ermitteln. Die ermittelten Verformungen lassen sich durch entsprechende Beaufschlagung der Presszylinder mit geänderten Presskräften kompensieren.

Grundsätzlich kann das Kompensationsmittel verschiedenartig ausgeführt sein. Das Kompensationsmittel ist zum Erzeugen einer hydraulischen und/oder pneumatischen Kompensationskraft und/oder als Ringkolbenzylinder ausgeführt. Bevorzugt ist das Kompensationsmittel zum Erzeugen einer mechanischen Kompensationskraft ausgeführt. Insbesondere bei einer Presse mit sphärischer Lagerung zwischen Presszylinder und Laufholm bzw. oberem Werkzeughalter ist das Kompensationsmittel bevorzugt ausgestaltet, eine schaltbare hydraulisch erzeugte Kompensationskraft einzubringen, um das Spiel zu kompensieren. Ganz besonders bevorzugt ist in, innerhalb oder unmittelbar an dem Lager ein Ringkolbenzylinder als Kompensationsmittel vorgesehen, um die hydraulisch erzeugte Kompensationskraft einzubringen. Ebenso ist abhängig von der benötigten Kompensationskraft und dem zur Verfügung stehenden Bauraum an der Anbindung zwischen Kolben oberem Werkzeughalter eine pneumatische Lösung gleicher Art möglich.

Nach einer alternativen bevorzugten Weiterbildung ist das Kompensationsmittel ausgeführt, die Kompensationskraft durch Rotation einer Kurvenscheibe und/oder Translation einer Keilgeometrie zu erzeugen. Derart lässt sich eine mechanische Klemmung zwischen Kolben und Oberwerkzeug erreichen, bei der die Kompensationskraft durch eine Relativbewegung entsprechender Geometrien der Kurvenscheibe und/oder der Keilgeometrie erzeugt wird, um das Spiel zu kompensieren.

Nach einer bevorzugten Weiterbildung ist das Kompensationsmittel als insbesondere geteilter Klemmring mit Klemmkolben ausgeführt. Sofern eine sphärische Lagerung zwischen Presszylinder und Laufholm bzw. oberem Werkzeugträger nicht erforderlich ist, beispielsweise weil prozessbedingt nur eine geringe Kippung zwischen Oberwerkzeug und Unterwerkzeug zu erwarten ist, kann das Kompensationsmittel als eine schaltbare Klemmung an einem Plattengelenk zwischen Kolben und Oberwerkzeug ausgebildet sein. Ebenso kann das Kompensationsmittel durch geteilte Klemmringe zwischen Kolben und Oberwerkzeug gebildet sein, die eine Anzahl hydraulisch miteinander verbundener Klemmkolben aufweisen, um das Spiel zwischen Kolben und Oberwerkzeug zu kompensieren.

Nach einer anderen bevorzugten Weiterbildung ist der Kolben über ein sphärisches Lager, ein kardanisches Gelenklager oder ein Plattengelenk an dem Oberwerkzeug angelenkt und/oder das Lager auf Druck und Zug belastbar ausgestaltet. Nach einer bevorzugten Weiterbildung weist die Presse einen oberen Werkzeugträger auf, an dem das Oberwerkzeug vorgesehen und der Kolben angelenkt ist. Der Presszylinder ist bevorzugt schwenkbar an den Oberholm und/oder der Kolben des Presszylinders ist besonders bevorzugt schwenkbar an das Oberwerkzeug bzw. den oberen Werkzeugträger angelenkt, insbesondere mittels eines auf Zug und Druck belastbaren, sphärischen Gelenklagers oder alternativ mittels des kardanischen Gelenklagers. Um eine einwandfreie gelenkige Anbindung zu realisieren, sind solche Gelenklager in der Regel mit einem gewissen Bewegungsspiel ausgerüstet. Dieses Bewegungsspiel wird mit Hilfe des Kompensationsmittels kompensiert. Das Oberwerkzeug kann folglich mit Hilfe des Presszylinders unter Zuhilfenahme des Kompensationsmittels in eine spielfreie Position und folglich sofort "auf Punkt" gefahren werden, ohne dass ein eventuell vorhandenes Spiel im Zuge des anschließenden Pressprozesses wieder herausgeregelt werden müsste.

In einer weiteren bevorzugten Ausgestaltung ist der Presszylinder als doppelt wirkender Differenzialzylinder ausgeführt, durch welchen der Kolben mit Druck und Zug beaufschlagbar ist. In vorteilhafter Weise lassen sich die Differenzialzylinder gleichsam zum Aufbringen der Presskraft sowie für das Öffnen und Schließen der Presse verwenden, ohne dass es separater Rückzugszylinder, Schnellhubantriebe oder dergleichen bedarf. Ebenso kann durch Vorsehen von Differenzialzylindern auf eine Positionierung der Presszylinder selbst, beispielsweise durch separate Spindeltriebe oder dergleichen, verzichtet werden. Aufwändige Verriegelungseinrichtungen sind ebenso nicht erforderlich. Vorzugsweise weist die Presse eine Mehrzahl Presszylinder auf.

Nach einer anderen bevorzugten Weiterbildung ist das Kompensationsmittel ausgeführt, die Kompensationskraft vor Aufbringen der Presskraft und/oder bei Anliegen der Presskraft auszuüben. Wie bereits angesprochen, lässt sich so in besonders vorteiliger Weise bereits vor dem Beginn des Pressvorgangs ein eventuell vorhandenes Spiel eliminieren und das Oberwerkzeug in eine spielfreie Position bringen. Es kann zweckmäßig sein, die Presse zunächst teilweise auf eine Spaltweite von beispielsweise 0,4 mm zwischen Oberwerkzeug und Unterwerkzeug zu schließen. Anschließend kann die Formmasse injiziert und das Oberwerkzeug mittels des Presszylinders bis auf den gewünschten Spalt von beispielsweise 0,2 mm nachgedrückt werden, um Poren innerhalb des Formteils zu schließen. Dieses Schließen der Poren ist für die Festigkeit des herzustellenden Formteils von großer Bedeutung. Durch das vorgeschlagene Kompensationsmittels lässt sich bei unterschiedlichen Presskräften für unterschiedliche Formmassen die für ein optimales Schließen der Poren erforderliche Soll-Position exakt anzufahren, ohne dass ein aufwändiges Ausregeln der Presskraft erforderlich wird, was den Pressprozess merklich beschleunigt.

Die Aufgabe der Erfindung wird weiterhin durch ein Verfahren zum Herstellen eines Formteils durch ein Oberwerkzeug und einem an einem Unterholm einer Presse vorgesehenen Unterwerkzeug gelöst, wobei ein Pressengestell der Presse einen Oberholm und den Unterholm und wenigstens einen an dem Oberholm vorgesehenen Presszylinder mit einem Kolben aufweist, welcher an dem Oberwerkzeug über ein Lager angelenkt und ausgeführt ist, eine Presskraft auf das Formteil auszuüben, mit den Schritten;
Ausüben einer der Presskraft entgegengesetzt wirkenden und variabel einstellbaren Kompensationskraft an dem Lager auf den Kolben und das Oberwerkzeug, um wenigstens ein durch eine Gewichtskraft des Oberwerkzeugs erzeugtes Spiel zwischen Kolben und Oberwerkzeug zu kompensieren, und
Ausüben der Presskraft zum Herstellen des Formteils.

Mit dem vorgeschlagenen Verfahren lassen sich bei einem sehr einfachen Aufbau der Presse Formteile in besonders wirtschaftlicher Weise präzise und schnell herstellen. Doppelt wirkende Differenzialzylinder als Presszylinder ermöglichen trotz verhältnismäßig großer Ölvolumina ein schnelles und exaktes Schließen und Öffnen sowie das Aufbringen selbst höchster Presskräfte. Durch die variabel einstellbare Kompensationskraft ist der Pressprozess flexibel an unterschiedliche Formmassen bei gleichzeitiger Optimierung der Geschwindigkeit und Genauigkeit anpassbar.

Bevorzugt ist die Presse als hydraulische Taktpresse zum Herstellen des Formteils aus einem Faserverbundwerkstoff im Wege des Spritzpressens insbesondere nach einem Resin Transfer Molding (RTM)-Verfahren ausgeführt. Weiter bevorzugt werden zunächst die Fasern, beispielsweise ein Faserhalbzeug, in ein Formwerkzeug eingelegt, das in der Regel aus dem Oberwerkzeug und dem Unterwerkzeug ausgebildet ist. Nach dem Schließen des Werkzeuges wird die Formmasse, beispielsweise eine ZweiKomponenten-Formmasse aus einem Harz und einem Härter, in den Formraum eingespritzt, so dass die Formmasse die Fasern als Matrix umschließt und unter Bildung des Formteils aushärtet. Vor und/oder während des Einspritzens der Formmasse kann die Form mit Unterdruck bzw. Vakuum beaufschlagt werden.

Alternativ lässt sich ein Sheet Molding Compound (SMC)-Verfahren verwenden, bei dem insbesondere plattenförmige, teigartige Pressmassen aus duroplastischen Reaktionsharzen und zumeist Glasfasern zum Herstellen von Faser-Kunststoff-Verbunden verwendet werden. Bei diesem Verfahren liegen alle nötigen Komponenten vorzugszugsweise vollständig vorgemischt und fertig zur Verarbeitung vor, wobei in der Regel Polyester- oder Vinylesterharze verwendet werden. Die SMC-Halbzeuge werden vorzugsweise mittels Fließpressen zu einem fertigen Formteil weiter verarbeitet. Beim In Mold Verfahren (IMC)-Verfahren werden Kunststoffteile, insbesondere Formteile aus Faserverbundwerkstoff, unmittelbar nach der formgebenden Herstellung noch innerhalb des Werkzeugs beschichtet, indem Lack in einen definierten Zwischenraum zwischen Werkzeug und Formteil eingespritzt wird.

Da die Formmasse oftmals nicht nur durch Härter oder Wärme sondern ebenso durch Druck aushärtet, ist es vorteilig, die Werkzeughälften, das Oberwerkzeug und das Unterwerkzeug, gegeneinander mittels der Presse mit einer vorgegebenen Presskraft zu verspannen. Zweckmäßigerweise sind die Werkzeughälften in der Presse montiert, so dass die Formmassen nach dem Einlegen der Fasern und nach dem Schließen in das geschlossene Werkzeug eingespritzt werden können.

Nach einer bevorzugten Weiterbildung weist das Verfahren den Schritt Steuern, Schalten und/oder Regeln der Kompensationskraft in Abhängigkeit von der Presskraft insbesondere derart auf, dass die Kompensationskraft größer als die Presskraft ist.

Weitere Ausführungsformen und Vorteile des Verfahrens ergeben sich für den Fachmann in Analogie zu der zuvor beschriebenen Presse.

### Kurze Beschreibung der Zeichnungen

Nachfolgend wird die Erfindung unter Bezugnahme auf die anliegende Zeichnung anhand bevorzugter Ausführungsbeispiele näher erläutert.

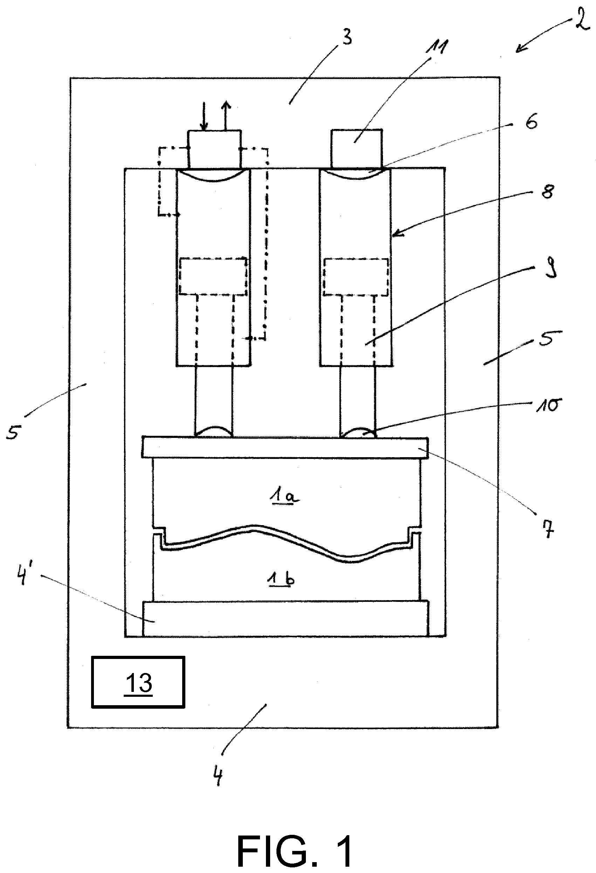

In der Zeichnung zeigen
- .Fig. 1: eine hydraulische Taktpresse zum Herstellen eines Formteils gemäß einem bevorzugten Ausführungsbeispiel der Erfindung in einer schematischen Ansicht,
- Fig. 2: eine Anbindung zwischen oberem Werkzeugträger und Presszylinder der in Fig. 1 gezeigten Presse gemäß dem bevorzugten Ausführungsbeispiel der Erfindung in einer schematischen Detailansicht, und
- Fig. 3: eine Anbindung zwischen oberem Werkzeugträger und Presszylinder der in Fig. 1 gezeigten Presse gemäß einem weiteren bevorzugten Ausführungsbeispiel der Erfindung in einer schematischen Detailansicht.

### Detaillierte Beschreibung der Ausführungsbespiele

Fig. 1 zeigt eine hydraulische Taktpresse zum Herstellen eines Formteils aus einem Kunststoff in einem aus einem aus einem Oberwerkzeug 1a und einem Unterwerkzeug 1b gebildeten Pressenwerkzeug. Das Pressenwerkzeug wird mit einem Faserhalbzeug beschickt und geschlossen. Der so gebildete Formraum wird mit der Formmasse, einem Harz und einem Härter, befüllt. Die Formmasse härtet unter Anwendung von durch die Presse aufgebrachten Druck und gegebenenfalls Wärme aus.

Die Presse weist ein Pressengestell 2 mit Oberholm 3 und Unterholm 4 sowie Seitenteile 5 auf. Die Presse kann in Rahmenbauweise ausgeführt sein und eine Vielzahl von geschlossenen und hintereinander angeordneten Pressenrahmen aufweisen. Alternativ kann die Presse in Säulenbauweise ausgeführt sein, so dass die Seitenteile von Pressensäulen oder dergleichen gebildet sind. Die Presse weist einen in vertikaler Richtung verfahrbaren oberen Werkzeugträger 7 auf, an dem das Oberwerkzeug 1a befestigt ist. Das Unterwerkzeug 1b ruht in der Regel ortsfest auf dem Unterholm 4 oder einem auf dem Unterholm 4 angeordneten Pressentisch bzw. an einem unteren Werkzeugträger 4'. An dem Oberholm 3 des Pressengestells 2 sind mehrere Presszylinder 8 befestigt, deren Kolben 9 auf den oberen Werkzeugträger 7 arbeiten, um eine Presskraft auf das Formteil auszuüben.

Die Presszylinder 8 sind als doppelt wirkende Differenzialzylinder ausgebildet, deren Kolben 9 mittels Zug-/Druckanbindungen direkt an den oberen Werkzeugträger 7 angeschlossen sind, so dass nicht nur die Presskraft aufgebracht wird, sondern auch das Öffnen und Schließen der Presse durch die Differenzialzylinder bewirkt wird. Der Hub der Presszylinder 8 ist dabei ausreichend groß, so dass auch ein Werkzeugwechsel und eine Anpassung an unterschiedliche Werkzeuggeometrien und insbesondere Werkzeughöhen möglich ist.

In der Stirnansicht auf die Presse sind lediglich zwei nebeneinander angeordnete Presszylinder 8 erkennbar. Es ist jedoch zweckmäßig, mehrere solche Zylinderreihen nebeneinander vorzusehen, so dass beispielsweise mit vier oder sechs Presszylindern 8 gearbeitet werden kann. Zur exakten und variablen Positionierung des Oberwerkzeugs 1a relativ zum Unterwerkzeug 1b sind die Kolben 9 der Presszylinder 8 schwenkbar an den oberen Werkzeugträger 7 unter Zwischenschaltung eines auf Zug und Druck belastbaren, sphärischen Gelenklagern 10 angeschlossen. Ein ebensolches sphärisches Gelenklager 6 ist zwischen den Zylindern 8 und dem Oberholm 3 vorgesehen. Ferner sind die Presszylinder 8 in bekannter Weise mit Steuerventilen 11 ausgerüstet.

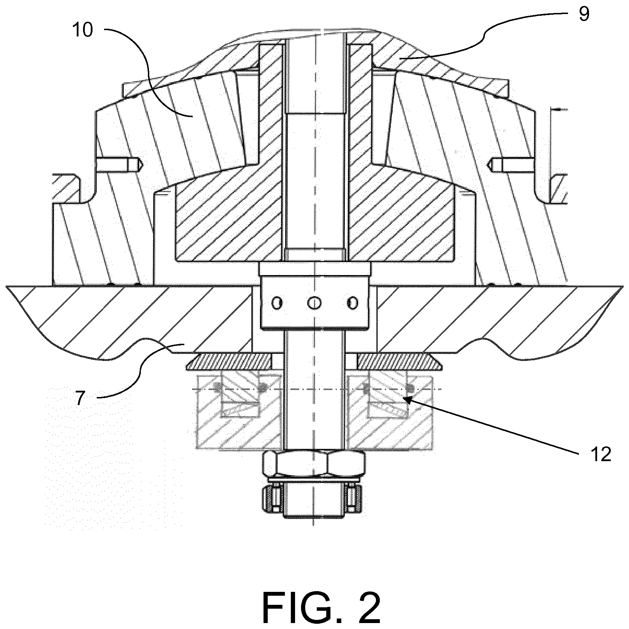

Fig. 2 zeigt eine Anbindung zwischen dem oberen Werkzeugträger 7 und dem Kolben 9 des Presszylinders 8 der Presse gemäß Fig. 1 in einer schematischen Detailansicht mit zuvor beschriebenen sphärischem Gelenklager 10. An dem Gelenklager 10 ist einteilig mit diesem ausgeführt ein Kompensationsmittel 12 vorgesehen, durch welches eine auf den Kolben 9 und das Oberwerkzeug 1a der Presskraft entgegengesetzt wirkende Kompensationskraft ausübbar ist. Die Kompensationskraft ist variabel einstellbar, um ein durch eine Gewichtskraft des Oberwerkzeugs 1a erzeugtes Spiel zwischen Kolben 9 und Oberwerkzeug 1a zu kompensieren. Mit anderen Worten wird das Spiel bzw. Spiellose unmittelbar direkt in der Anbindung zwischen Presszylinder 8 und Oberwerkzeug 1a entfernt.

Zum variablen Einstellen der Kompensationskraft ist eine mikroprozessorbasierte Steuer- und/oder Regeleinrichtung 13 vorgesehen, schematisch in Fig. 1 gezeigt, durch welche die Kompensationskraft in Abhängigkeit von der Presskraft steuerbar und/oder regelbar ist. Derart lässt sich die Kompensationskraft an eine jeweilige Pressphase wie beispielsweise Gewichtskompensation oder Kompensation von Werkzeugaufreißkräften anpassen. Durch die Steuer- und/oder Regeleinrichtung 13 kann die Kompensationskraft gesteuert werden, dass diese vor Aufbringen der Presskraft und bei Anliegen der Presskraft ausgeübt wird.

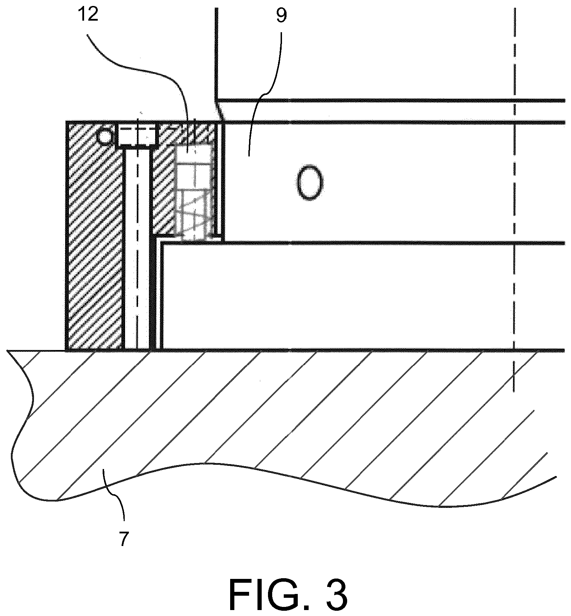

Fig. 3 zeigt ein Ausführungsbeispiel, bei dem das Kompensationsmittel 12 als Ringkolbenzylinder zum Aufbringen einer schaltbaren, hydraulisch erzeugten Kompensationskraft ausgebildet ist und den Kolben 9 umlaufend einfasst. Genannter Ringkolben ist insbesondere so gestaltet, dass der Freiheitsgrad der sphärischen Lagerung 10 nicht eingeschränkt wird. Alternativ oder zusätzlich kann das Kompensationsmittel 12, in Abhängigkeit vom verfügbaren Bauraum an der Presse, zum Erzeugen einer pneumatischen und/oder mechanischen Kompensationskraft an dem Gelenklager 10 ausgeführt sein. Bei einer mechanischen Klemmung lässt sich die Kompensationskraft durch eine Relativbewegung entsprechende Geometrien erzeugen, beispielsweise durch Rotation einer Kurvenscheibe und/oder Translation einer Keilgeometrie.

Sofern eine sphärische Lagerung zwischen Presszylinder 8 und Werkzeugträger 7 nicht erforderlich ist, da prozessbedingt eine sehr geringe Kippung zwischen Oberwerkzeugs 1a und Unterwerkzeug 1b zu erwarten ist, kann eine schaltbare Klemmung am Plattengelenk ausgestaltet sein. Fig. 2 zeigt ein entsprechendes Ausführungsbeispiel als Schnitt, wobei das Kompensationsmittel 12 durch geteilte Klemmringe, die eine Anzahl hydraulisch miteinander verbundene Klemmkolben enthalten, ausgeführt ist.

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Oberwerkzeug | 1a |
| Unterwerkzeug | 1b |
| Pressengestell | 2 |
| Oberholm | 3 |
| Unterholm | 4 |
| Seitenteile | 5 |
| Gelenklager | 6 |
| Oberen Werkzeugträger | 7 |
| Presszylinder | 8 |
| Kolben | 9 |
| Gelenklager | 10 |
| Steuerventil | 11 |
| Kompensationsmittel | 12 |
| Steuer- und/oder Regeleinrichtung | 13 |

## Patentansprüche

1. Presse zum Herstellen eines Formteils aus einem Kunststoff mit
einem einen Oberholm (3) und einen Unterholm (4) aufweisenden Pressengestell (2),
einem Oberwerkzeug (1a) und einem an dem Unterholm (4) vorgesehenen Unterwerkzeug (1b) zum Herstellen eines Formteils,
wenigstens einem an dem Oberholm (3) vorgesehenen Presszylinder (8) mit einem Kolben (9), welcher an dem Oberwerkzeug (1a) über ein Lager (10) angelenkt und ausgeführt ist, eine Presskraft auf das Formteil auszuüben, und
einem an dem Lager (10) vorgesehenen Kompensationsmittel (12), welches ausgeführt ist, auf den Kolben (9) und das Oberwerkzeug (1a) eine der Presskraft entgegengesetzt wirkende und variabel einstellbare Kompensationskraft auszuüben, um wenigstens ein durch eine Gewichtskraft des Oberwerkzeugs (1a) erzeugtes Spiel zwischen Kolben (9) und Oberwerkzeug (1a) zu kompensieren. **gekennzeichnet durch** eine Steuer- und/oder Regeleinrichtung (13), welche ausgeführt ist, die Kompensationskraft in Abhängigkeit von der Presskraft zu steuern und/oder zu regeln, wobei
das Kompensationsmittel (12) zum Erzeugen einer hydraulischen und/oder pneumatischen Kompensationskraft und/oder als Ringkolbenzylinder ausgeführt ist.

2. Presse nach Anspruch 1, wobei das Kompensationsmittel (12) ausgeführt ist, die Kompensationskraft durch Rotation einer Kurvenscheibe und/oder Translation einer Keilgeometrie zu erzeugen.

3. Presse nach einem der vorhergehenden Ansprüche, wobei das Kompensationsmittel (12) als insbesondere geteilter Klemmring mit Klemmkolben ausgeführt ist

4. Presse nach einem der vorhergehenden Ansprüche, wobei der Kolben (9) über ein sphärisches Lager (6), ein kardanisches Gelenklager oder ein Plattengelenk an dem Oberwerkzeug (1a) angelenkt ist und/oder das Lager auf Druck und Zug belastbar ist.

5. Presse nach einem der vorhergehenden Ansprüche, mit einem oberen Werkzeugträger (7), an dem das Oberwerkzeug (1a) vorgesehen und der Kolben (9) angelenkt ist.

6. Presse nach einem der vorhergehenden Ansprüche, wobei der Presszylinder (8) als doppelt wirkender Differenzialzylinder ausgeführt ist, durch welchen der Kolben (9) mit Druck und Zug beaufschlagbar ist.

7. Presse nach einem der vorhergehenden Ansprüche, wobei das Kompensationsmittel (12) ausgeführt ist, die Kompensationskraft vor Aufbringen der Presskraft und/oder bei Anliegen der Presskraft auszuüben.

8. Verfahren zum Herstellen eines Formteils aus einem Kunststoff durch ein Oberwerkzeug (1a) und einem an einem Unterholm (4) einer Presse vorgesehenen Unterwerkzeug (1b), wobei ein Pressengestell (2) der Presse einen Oberholm (3) und den Unterholm (4) und wenigstens einen an dem Oberholm (3) vorgesehenen Presszylinder (8) mit einem Kolben (9) aufweist, welcher an dem Oberwerkzeug (1a) über ein Lager (10) angelenkt und ausgeführt ist, eine Presskraft auf das Formteil auszuüben, mit den Schritten;
Ausüben einer der Presskraft entgegengesetzt wirkenden und variabel einstellbaren hydraulischen und/oder pneumatischen und in Abhängigkeit der Presskraft gesteuerten und/oder geregelten Kompensationskraft an dem Lager (10) auf den Kolben (9) und das Oberwerkzeug (1a), um wenigstens ein durch eine Gewichtskraft des Oberwerkzeugs (1a) erzeugtes Spiel zwischen Kolben (9) und Oberwerkzeug (1a) zu kompensieren, und
Ausüben der Presskraft zum Herstellen des Formteils.

9. Verfahren nach dem vorhergehenden Anspruch, mit dem Schritt:
Steuern, Schalten und/oder Regeln der Kompensationskraft in Abhängigkeit von der Presskraft insbesondere derart, dass die Kompensationskraft größer als die Presskraft ist.

## Claims

1. A press for producing a molded part made of a plastics material, comprising
a press frame (2) having an upper beam (3) and a lower beam (4),
an upper die (1a) and a lower die (1b) provided on the lower beam (4) for producing a molded part,
at least one pressing cylinder (8) provided on the upper beam (3) and comprising a piston (9), which is articulated to the upper die (1a) by a bearing (10) and is configured to exert a pressing force on the molded part, and
a compensation means (12) provided on the bearing (10), which means is configured to exert a variably adjustable compensation force acting counter to the pressing force on the piston (9) and the upper die (1a), in order to compensate for at least one clearance generated by a weight force of the upper die (1a) between the piston (9) and the upper die (1a), **characterized by** a control and/or regulating device (13), which is configured to control and/or regulate the compensation force on the basis of the pressing force, wherein
the compensation means (12) is configured to generate a hydraulic and/or pneumatic compensation force and/or is configured as a rotary piston cylinder.

2. The press according to claim 1, wherein the compensation means (12) is configured to generate the compensation force by rotation of a cam disk and/or translation of a wedge geometry.

3. The press according to any one of the preceding claims, wherein the compensation means (12) is configured as an in particular split clamping ring comprising a clamping piston.

4. The press according to any one of the preceding claims, wherein the piston (9) is articulated to the upper die (1a) and/or the bearing can be subjected to compression and tension by means of a spherical bearing (6), a gimballed spherical plain bearing, or a planar joint.

5. The press according to any one of the preceding claims, comprising an upper die carrier (7), on which the upper die (1a) is provided and to which the piston (9) is articulated.

6. The press according to any one of the preceding claims, wherein the pressing cylinder (8) is configured as a double-acting differential cylinder, by means of which the piston (9) can be subjected to compression and tension.

7. The press according to any one of the preceding claims, wherein the compensation means (12) is configured to exert the compensation force before applying the pressing force and/or when the pressing force is being applied.

8. A method for producing a molded part from a plastics material by means of an upper die (1a) and a lower die (1b) provided on a lower beam (4) of a press, wherein a press frame (2) of the press comprises an upper beam (3) and the lower beam (4), and at least one pressing cylinder (8) provided on the upper beam (3) and comprising a piston (9), which is articulated to the upper die (1a) by a bearing (10) and is configured to exert a pressing force on the molded part, comprising the steps of:
exerting a variably adjustable hydraulic and/or pneumatic compensation force, which acts counter to the pressing force and is controlled and/or regulated on the basis of the pressing force, at the bearing (10) on the piston (9) and the upper die (1a), in order to compensate for at least one clearance generated by a weight force of the upper die (1a) between the piston (9) and the upper die (1a), and
exerting the pressing force to produce the molded part.

9. The method according to the preceding claim, comprising the step of:
controlling, switching, and/or regulating the compensation force on the basis of the pressing force, in particular such that the compensation force is greater than the pressing force.

## Revendications

1. Presse destinée à produire une pièce moulée fabriquée en une matière plastique, comprenant
un cadre de presse (2) ayant une poutre supérieure (3) et une poutre inférieure (4),
une filière supérieure (1a) et une filière inférieure (lb) pourvues sur la poutre inférieure (4) pour produire une pièce moulée,
au moins un cylindre de pression (8) pourvu sur la poutre supérieure (3) et comprenant un piston (9), qui est articulé avec la filière supérieure (1a) par l'intermédiaire d'un palier (10) et est conçu pour exercer une force de pression sur la pièce moulée, et
un moyen de compensation (12) pourvu sur le palier (10), lequel moyen est conçu pour exercer une force de compensation ajustable de manière variable s'opposant à la force de pression sur le piston (9) et la filière supérieure (la), afin de compenser au moins un espace généré par un poids de la filière supérieure (la) entre le piston (9) et la filière supérieure (la), **caractérisé par** un dispositif de commande et/ou de régulation (13), qui est conçu pour commander et/ou réguler la force de compensation sur la base de la force de pression, dans lequel
le moyen de compensation (12) est conçu pour générer une force de compensation hydraulique et/ou pneumatique et/ou est conçu en tant que cylindre de piston rotatif.

2. Presse selon la revendication 1, dans laquelle le moyen de compensation (12) est conçu pour générer la force de compensation par rotation d'un disque à came et/ou translation d'une géométrie cunéiforme.

3. Presse selon l'une quelconque des revendications précédentes, dans laquelle le moyen de compensation (12) est conçu en tant qu'en particulier une bague de serrage fendue comprenant un piston de serrage.

4. Presse selon l'une quelconque des revendications précédentes, dans laquelle le piston (9) est articulé avec la filière supérieure (1a) et/ou le palier peut être soumis à compression et tension au moyen d'un palier sphérique (6), d'un palier lisse sphérique à cardan, ou d'un joint plat.

5. Presse selon l'une quelconque des revendications précédentes, comprenant un support de filière supérieure (7), sur lequel est pourvue la filière supérieure (1a) et avec lequel le piston (9) est articulé.

6. Presse selon l'une quelconque des revendications précédentes, dans laquelle le cylindre de pression (8) est conçu en tant que cylindre différentiel à double action, au moyen duquel le piston (9) peut être soumis à compression et tension.

7. Presse selon l'une quelconque des revendications précédentes, dans laquelle le moyen de compensation (12) est conçu pour exercer la force de compensation avant d'appliquer la force de pression et/ou lorsque la force de pression est appliquée.

8. Procédé de production d'une pièce moulée à partir d'une matière plastique au moyen d'une filière supérieure (1a) et d'une filière inférieure (1b) pourvues sur une poutre inférieure (4) d'une presse, dans lequel un cadre de presse (2) de la presse comprend une poutre supérieure (3) et la poutre inférieure (4), et au moins un cylindre de pression (8) pourvu sur la poutre supérieure (3) et comprenant un piston (9), qui est articulé avec la filière supérieure (la) par un palier (10) et est conçu pour exercer une force de pression sur la pièce moulée, comprenant les étapes consistant à :
exercer une force de compensation hydraulique et/ou pneumatique ajustable de manière variable, qui s'oppose à la force de pression et est commandée et/ou régulée sur la base de la force de pression, au niveau du palier (10) sur le piston (9) et la filière supérieure (la), afin de compenser au moins un espace généré par un poids de la filière supérieure (1a) entre le piston (9) et la filière supérieure (1a), et
exercer la force de pression pour produire la pièce moulée.

9. Procédé selon la revendication précédente, comprenant l'étape consistant à :
commander, commuter et/ou réguler la force de compensation sur la base de la force de pression, en particulier de telle sorte que la force de compensation est supérieure à la force de pression.
